# EUROPEAN PATENT SPECIFICATION

(11) **EP 1 514 176 B1**
(45) Date of publication and mention of the grant of the patent: **10.10.2007**
(21) Application number: 03730396.3
(22) Date of filing: 04.06.2003
(51) Int. Cl.: G06F 9/24

(54) **METHOD AND APPARATUS FOR WRITING DATA TO A NON-VOLATILE MEMORY**
VERFAHREN UND VORRICHTUNG ZUM EINSCHREIBEN VON DATEN IN EINEN NICHT FLÜCHTIGEN SPEICHER
PROCEDE D'ECRITURE DE DONNEES SUR UNE MEMOIRE REMANENTE INTEGREE DANS UN CIRCUIT INTEGRE ET CIRCUIT CORRESPONDANT

(30) Priority: 06.06.2002 EP 02012577
(43) Date of publication of application: 16.03.2005
(73) Proprietor: NXP B.V., 5656 AG Eindhoven (NL)
(72) Inventor: CAMAPANALE, Fabrizio, Weisshausstr. 2, 52066 Aachen (DE)
(74) Representative: Pennings, Johannes
(86) International application number: PCT/IB2003/002093
(87) International publication number: WO 2003/104976

(56) References cited:
- DE-A- 10 052 877
- US-A- 4 382 279
- US-A- 5 974 528
- BROWN C ET AL: "SIMULTANEOUS CODE EXECUTION AND DATA STORAGE IN A SINGLE FLASH MEMORY CHIP FOR REAL TIME WIRELESS COMMUNICATION SYSTEMS" PROCEEDINGS OF THE 40TH MIDWEST SYMPOSIUM ON CIRCUITS AND SYSTEMS. MWSCAS '97. SACRAMENTO, CA, AUG. 3 - 6, 1997, MIDWEST SYMPOSIUM ON CIRCUITS AND SYSTEMS, NEW-YORK, NY: IEEE, US, vol. 2, 3 August 1997 (1997-08-03), pages 740-745, XP000789261 ISBN: 0-7803-3695-X
- DIPERT B ET AL: "DESIGNING AN UPDATABLE BIOS USING FLASH MEMORY" MICROPROCESSORS AND MICROSYSTEMS, IPC BUSINESS PRESS LTD. LONDON, GB, vol. 16, no. 8, 1992, pages 427-446, XP000330850 ISSN: 0141-9331

## Description

The invention relates to a method for writing data from a processor to a non-volatile memory embedded in an integrated circuit and to a corresponding integrated circuit particularly adapted to execute this method.

Such integrated circuits are extensively used in portable devices, e.g. wireless modules, mobile phones, digital cordless devices or personal digital assistants (PDAs). In this market, size and power consumption are decisive factors, thus the small area factor is a primary request. Thus, the integration of a non-volatile memory with a memory control unit (MCU) of the baseband system seems to be an adequate choice to reduce the number of components and pinouts and to improve routability and thus reduced overall system cost.

On the other hand, there are several other aspects contributing to improve the performance/cost ratio of a baseband system on chip (SOC).

One of the most effective characteristics is an appropriately chosen memory hierarchy. Distributing the memory resources through a hierarchy with different access capabilities and different costs and sizes results in an overall improvement of the system performance.

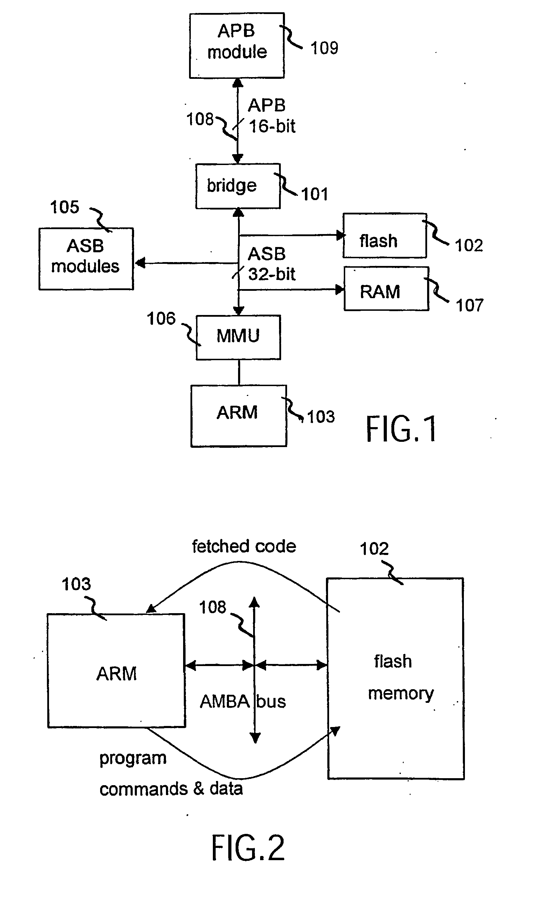

Fig. 1 shows a typical, so-called Harvard Architecture. A bridge 101 is connected over a 32-bit bus 104 to advanced system bus (ASB) modules 105, a memory management unit (MMU) 106, a RAM 107 and a flash memory 102. An advanced RISC machine (ARM) 103 is connected to the MMU 106. Over a 16-bit bus 108, the bridge 101 is connected to advanced peripheral bus (APB) modules 109. These can be universal serial bus (USB) modules, for example. It is evident that the main costs in terms of area are in the memory hierarchy. So a smart choice of the sizes and types of memory, strictly depending on the performance required, is the base of design success.

Since many applications require a certain layer of software for the microcontroller within a Harvard Architecture, a read only memory (ROM) is typically used for the instruction memory (IMEM), while for the data memory a volatile memory, e.g. a DRAM or SRAM, is mostly chosen. This provides the chance to use the bootcode memory space on the die also as instruction memory, thus saving space and increasing the robustness and the security of the system. The advantage is that an embedded ROM, being integrated with the baseline process, does not require special technology options.

However, such a solution requires a stable software and is thus suitable only for final, high volume production. Since most applications need several software refinements, the ROM solution is not suitable for the IMEM. Thus an embedded flash memory used as IMEM could represent the best solution in terms of size and performance.

Moreover, the microprocessor has to deal with a more complicated writing procedure, consisting in loading the data into the memory and then programming the cells.

If the system has been designed to use the flash memory 102 as instruction memory, the microprocessor 103 will perform most of the time read accesses to this flash memory 102 whereas it will write into the RAM 107.

Unfortunately, if the software requires to store some data permanently, a write operation to the flash memory 102 is required. In this case, the execution code for programming the data must not run from within the flash memory 102, because the flash memory 102 is not available for simultaneous read access - the fetching of the instruction from the microprocessor - and program access.

Differently from a read/write/read sequence to a RAM, where the write operation is self reset, the same sequence of operations is not allowed for a flash memory because this sequence will cause a conflict.

Flash memories need to be set in read or program mode. This is done by executing the proper commands through the software code. So a general sequence of commands which wants to perform the mentioned sequence will be:
(1) Set the flash memory in program mode;
(2) Write DATA-1 to be programmed to flash ADDRESS-1;
(3) Write DATA-2 to be programmed to flash ADDRESS-2.

As soon as the instruction (1) is executed, the flash memory 102 is not available for reading anymore. So no other instruction could be fetched and executed. Moreover and more fatal, the flash memory 102 shown in Fig. 2 will stay in this mode until a new instruction will set it again in read mode. But because the processor 103 is not able to fetch instructions from the flash memory 102 anymore, this will never happen. This obviously creates a deadlock for the system.

In Cáceres et al. US patent 5 802 554, a method and a system for reducing memory access latency by providing fine grain direct access to flash memory concurrent with a block transfer there from is described. The memory management unit controls the content of the cache with data either from a first level of memory hierarchy or a second level of memory hierarchy. However this solution cannot use the flash memory as IMEM.

US 5,974,528 describes a microcomputer with embedded flash memory having on chip programming capability. The microprocessor is coupled via a bus with a register and via a bus multiplexer with a flash memory. The flash memory includes a loader block and a user block, which are coupled via a common I/O circuit to the bus multiplexer. The flash memory and the bus multiplexer are controlled by the microprocessor. Further, there is a register set, which is coupled to the bus. In case of reprogramming the flash memory, a loader program is loaded from the loader block in the flash memory into the microprocessor and executed by the microprocessor. Then, the I/O circuit is switched to the user block and data to be reprogrammed are, at first, stored in the register set before being written in the user block. During programming the data in the user block an interrupt is generated. Thus, the microprocessor is switched in an idle mode. During the time of the idle mode the data stored in the register are transferred and written in the user block after reaching a preset time a timer generates an interrupt signal for waking up the microprocessor from the idle mode.

US 4,382,279 describes a microprocessor architecture with automatic programming of a non-volatile memory included on the same chip. Memory writing of the non-volatile memory can be effected by a write automaton comprising hard-wired logic circuits. The write automaton is operated by a write microcode emitted by the processor, and the write automaton transmits a RELEASE signal to the processing unit to resume the current program, when the writing is completed.

A first and main object of the invention is to provide a method for writing data from a processor to a non-volatile memory embedded in an integrated circuit and a corresponding integrated circuit, which method lets the processor "see" the non-volatile memory as instruction memory and as volatile memory.

In other words, the invention consists in a method and a hardware implementation which hides the writing access to an embedded flash memory, deviating the data to the RAM through a direct memory access (DMA) approach, until all the data have been sent from the microprocessor. In this way, the microprocessor is able to continuously fetch instructions from the flash memory which works as instruction memory. Nevertheless, the flash memory is still available in read mode until it receives the final program command.

With the invention, the microprocessor can use the embedded flash memory as instruction memory and can write into those parts/space of the same memory which has to be programmed.

The architecture according to the invention can drastically reduce the software development time by embedding a mechanism which lets the microcontroller see the memory space simply as a normal volatile memory space.

The problem is solved by a method for writing data from a processor to a non-volatile memory embedded in an integrated circuit, with the features according to an independent method claim and by an integrated circuit with the features according to an independent apparatus claim.

The method for writing data from a processor to a non-volatile memory embedded in an integrated circuit according to the invention comprises the following steps:

The data, which shall be written to the non-volatile memory, will be transferred at first to a volatile memory.

As soon as the data have been transferred to the volatile memory, a wait signal will be send to the processor.

Afterwards the data will be transferred from the volatile memory to the non-volatile memory.

At last, the wait signal will be removed.

The integrated circuit according to the invention comprises a processor, a volatile memory, a non-volatile memory and an interface connecting the processor to the volatile memory and the non-volatile memory to the volatile memory. The interface is equipped
- to transfer data, which are to be written to the non-volatile memory, at first to the volatile memory,
- to send as soon as the data have been transferred to the volatile memory, a wait signal to the processor,
- to transfer the data from the volatile memory to the non-volatile memory, and at last
- to remove the wait signal.

Advantageous further developments of the invention arise from the characteristics indicated in the dependent claims.

In one embodiment of the invention, the data transfer is controlled by an interface.

In an another embodiment of the invention, the non-volatile memory will be set into the write mode at the beginning of the data transfer from the volatile memory to the non-volatile memory.

In a further embodiment of the invention, during the data transfer from the volatile memory to the non-volatile memory, the non-volatile memory will be set into the program mode.

In a still further embodiment of the invention, at the end of the data transfer from the volatile memory to the non-volatile memory, the non-volatile memory will be set in read mode.

Advantageously all of the data are transferred at first to the volatile memory. With this kind of block-wise data transfer, the whole system can be accelerated.

In an another embodiment of the invention, the addresses corresponding to the data, which shall be written to the non-volatile memory, are stored intermediately.

To avoid the risk of a deadlock, a wait signal will be send to the processor before the data are written to the volatile memory and will be removed after the data are written to the volatile memory.

In a further embodiment of the invention, the non-volatile memory of the integrated circuit is a flash memory and/or the volatile memory is a embedded RAM.

Subsequently, the invention is further explained with the drawings showing in
Fig. 1 an advanced RISC machine based subsystem with an embedded flash memory according to the state of the art;
Fig. 2 a block diagram of the communication between a flash memory and a processor;
Fig. 3 a diagram with a sequence of instructions to avoid a deadlock of a first embodiment;
Fig. 4 a diagram with a sequence of instructions to avoid a deadlock of a second embodiment;
Fig. 5a the first part of a flow diagram of the operations together with corresponding block diagrams of an integrated circuit according to the invention;
Fig. 5b the second part of the flow diagram shown in Fig. 5a;
Fig. 6a the first part of a block diagram of an implementation of the integrated circuit according to the invention;
Fig. 6b the second part of the block diagram shown in Fig. 6a;
Fig. 7 a diagram of a main state machine according to the invention;
Fig. 8 a behaviour description of an embedded direct memory access (DMA) engine according to the invention.

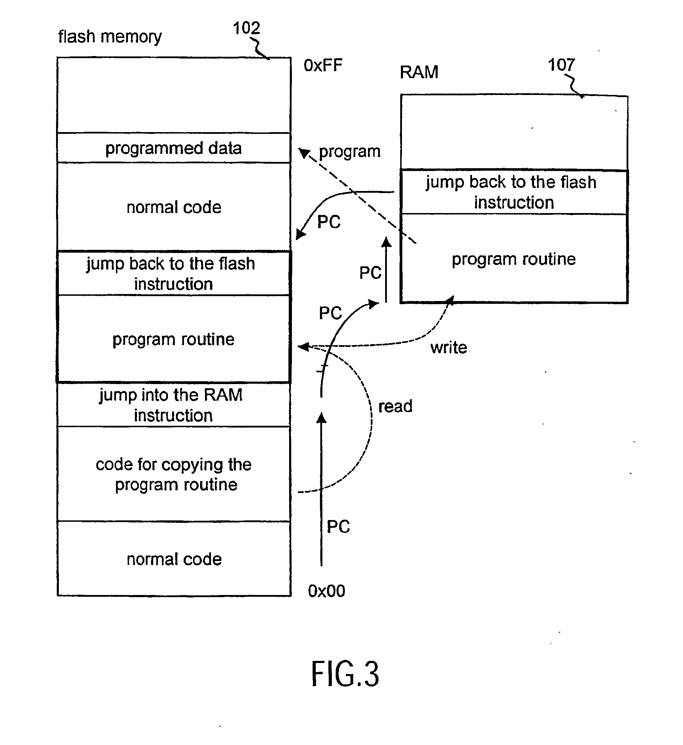

A solution for the deadlock problem occurred in the architecture according to Fig. 1 is to download the portion of code which performs the program operation into the RAM 107, then branch to the first instruction of this program routine in the RAM 107, execute the program operation from within the RAM 107 and finally, after the programming of the flash memory 102, jump again to the code in the flash memory 102. This is shown in Fig. 3.

The main limitation of this software approach lies in the difficulty to properly manage the code and the addresses. If the code is written in a high-level language, e.g. in C-language, the software engineer has to deal with massive use of pointers and function calls through pointers in order to execute the program routine not from within the flash memory 102, but within the RAM 107.

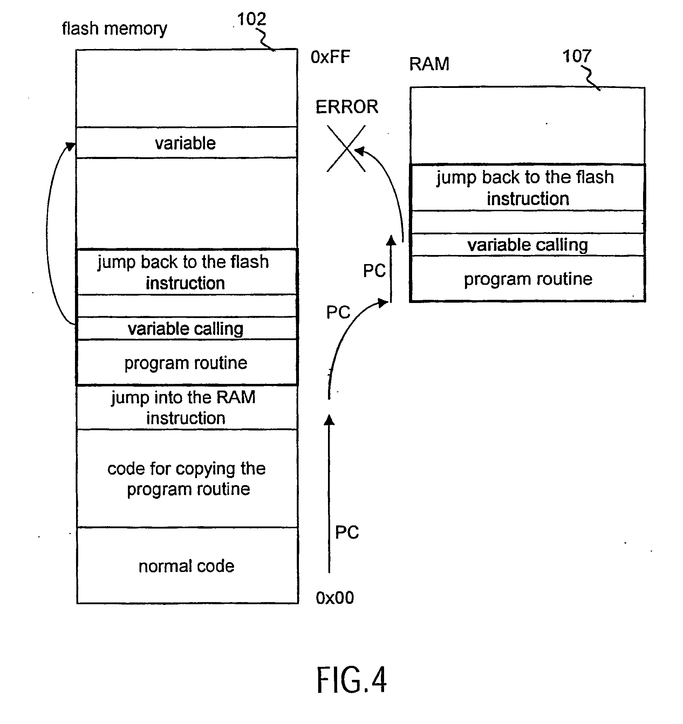

Moreover, the program routine shown in Fig. 4 is using some variables stored in the flash memory address space, which is a common situation, whereby the compiler is not aware from where the routine will be executed. As soon as during the execution of the program routine such variables are called, an exception error will occur, because the flash memory 102 is not accessible in read mode.

Finally, to write the copy routine, which should copy the program routine from the flash memory 102 to the RAM 107, the software engineer has to know information about the program routine, like the start address, the end address and the size of the portion of code to transfer. But these are not available at the moment of the software writing. So the only possibility is to compile a first draft version of the complete code, then, from the assembly version of the compiled code, extract the required information, rewrite the code and recompile it. Any further modification on the code will change the relative addressing of the instructions and will need such an approach again for an iterative approximation.

The following is an example of how to manage the dumping of the routine which must be executed from the RAM 107 instead from the flash memory 102 through a high level language approach. A memcopy command will copy the routine in the RAM 107 and, through a proper pointer assignment, it will be possible to call the routine to be executed from this RAM address. Unfortunately this does not avoid the occurrence of errors if a variable calling will try to access to the flash memory address space.

The memcopy command needs the start address and the size of the routine to be copied. So a first draft compilation has to be done to get the start address and the size of the routine, because these become available only after a compilation. Now the correct information can be inserted in the code and compiled again. Each modification in the code will change the addresses of the instructions in the compiled code, so the procedure described so far must be performed again.

A less user-friendly but more accurate approach is to write part of the code directly in assembly language. The sequence:
(1) copying the flash program routine in the RAM;
(2) call the flash program routine to be executed from the RAM;
(3) jump back to the flash memory;
is split into two routines instead of being managed through library commands, like memcopy, and function calls through pointers. To achieve the above mentioned sequence, in the main C-code, the following assembly routine is called:
(a) assembly routine:
   (a.1) copy the code from the flash memory to the RAM;
   (a.2) force the program counter of the processor to the first instruction address of the RAM where the routine has been copied.

   The flash program routine is now executed from the RAM.
(b) flash program routine running from RAM:
   (b.1) program the flash memory;
   (b.2) call an other assembly routine to force the program counter of the processor to the first instruction address of the rest of the code in the flash memory
   address space.

The execution from now on will continue from the flash memory.

In this way, the routine executing from the RAM 107 will first program the flash memory 102, then call an assemble routine which forces the program counter in the flash memory address space, and then continue to execute the code, but from the flash memory 102.

The advantage of this approach compared to the above-mentioned solution is the direct control of the addresses of the instruction, the compiler not being involved in the copying and in the jumps to and from the RAM 107 and so fewer possibilities of wrong attempts to access the flash memory 102 during the program operation.

Also in this case, a first draft compilation is required at every modification of the code in order to know where to jump in the RAM 107 and where to jump back into the flash memory 102.

Finally, for preventing wrong attempts to access the flash memory 102 during executing the code from the RAM 107, the safest way is to copy not only the program routine into the RAM 107, but also the rest of the code. The disadvantage of this approach is a high RAM area consumption.

An example of how to manage the dumping of the routine which must be executed from the RAM 107 instead from of the flash memory 102 through low level language approach is given below.
(a) The C-main program will call the first assembly routine.
(b) This will copy the interesting blocks of flash memory contents into the RAM 107 and then will force the program counter to the first instruction of the program now copied into the RAM 107.
(c) From now on, the code will be executed from the RAM 107 and it is possible to program the flash memory 102.
(d) When the program operation is finished, a second assembly routine will be called just for forcing the program counter to the next valid instruction of the C-code, but this time in the flash memory 102, which is now available again. As before, all information regarding where to jump into the RAM 107 and into the flash memory 102 becomes available only after a first draft compilation, and must be checked at every code modification.

The target of the embodiment described below is to provide a means to the software development which allows to program the non-volatile instruction memory without doing it from an other memory, but simply interfacing it as a RAM and just waiting the required program time.

The following definitions will be used. An interface allows to write through a proper load_command the data to be programmed in an embedded register of data latches. This will be called load operation. With a proper program_command, the programming itself will be started. Both operations require to set the flash memory into write mode. After setting the flash memory into write mode, these two commands could not be executed from within the flash memory.

The invention is not restricted to any special kind of embedded flash memory, but may be employed with any non-volatile memory.

The embodiment consists in an interface which, during the load operation, will transfer the data to be programmed, rather than in the embedded register of the flash memory, in the RAM through a kind of direct memory access (DMA), keeping track of the addresses where this data must be written in the flash memory, but without setting the flash memory in write mode and so still keeping the flash memory available for reading the instructions. As soon as all data to be programmed have been sent from the microprocessor, the next command will be for the real programming of the flash memory. In this case, the interface will send a wait signal back to the microprocessor, so that the latter will not try to fetch instructions from the flash memory. After setting the flash memory in write mode, the interface will start the transfer from the RAM to the embedded register into the flash memory for the actual load operation. At the end of the load operation, the interface will send the program command to the flash memory and, at the end of the program operation, the interface will remove the wait signal from the microprocessor bus.

From the processor's viewpoint, a simple write operation has been performed. The write operation lasts longer then the write operation for a RAM, due to the program time of the flash memory, but there are no special time-consuming tricks anymore required for the operations of copying/jumping/programming/jumping .

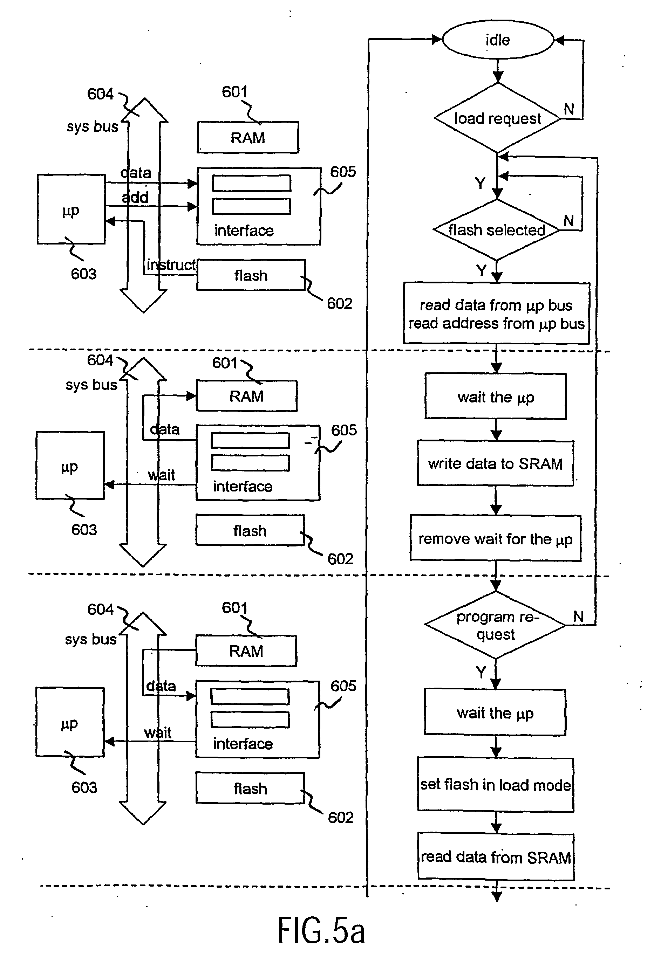

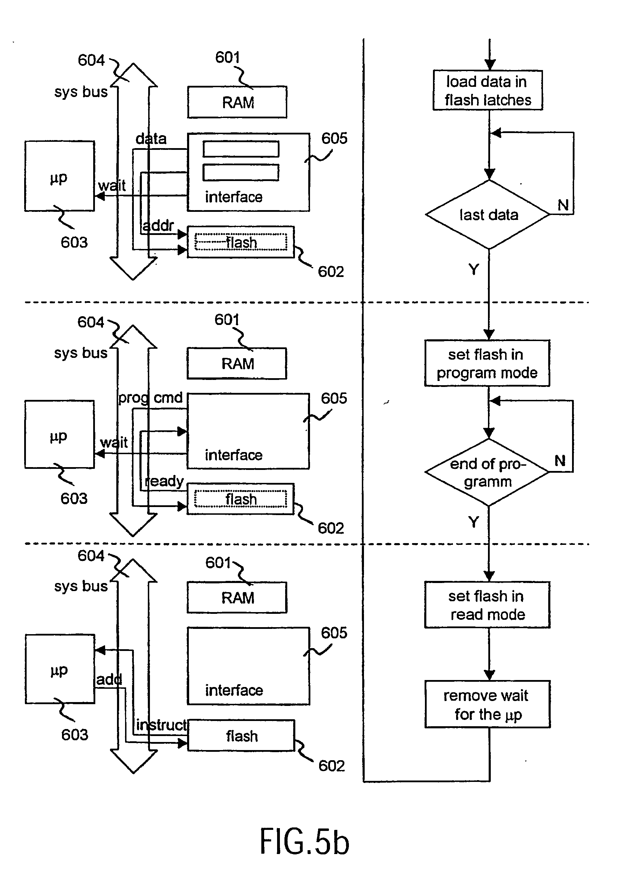

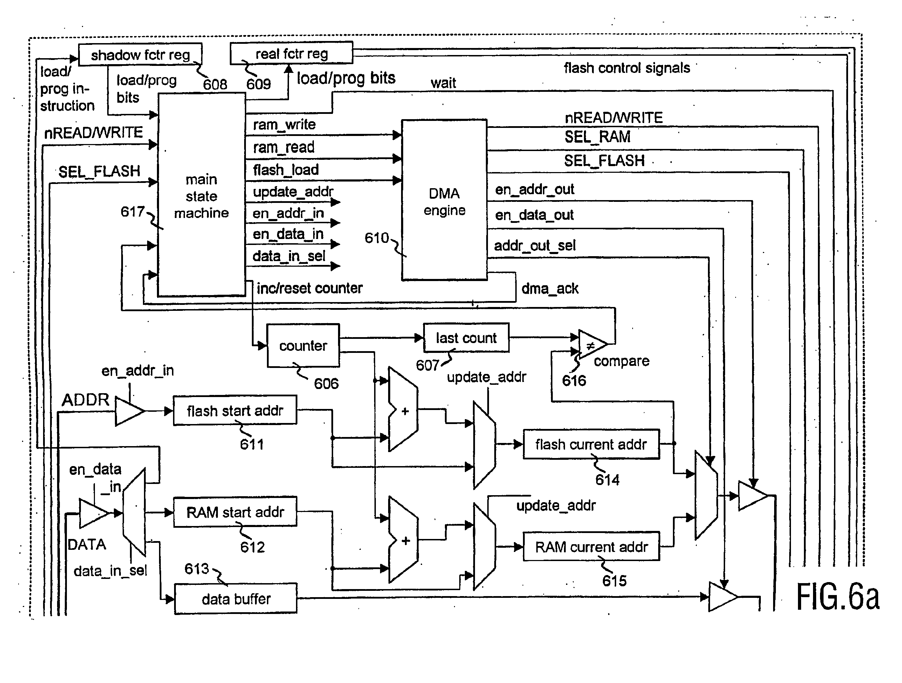

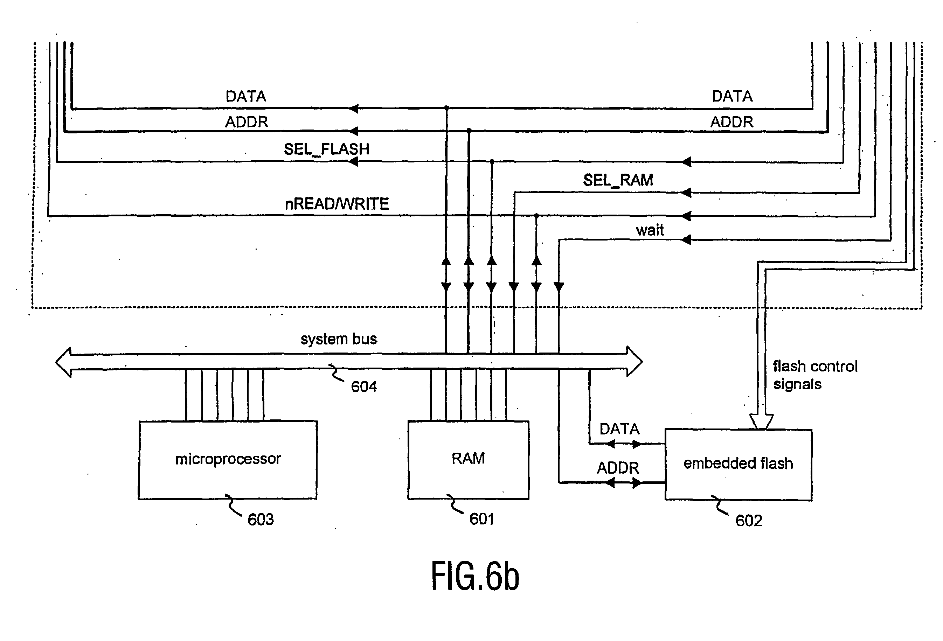

The following describes the operations shown in the flow diagram of Figs. 5a and 5b together with the block diagram of Figs. 6a and 6b performed by the interface 605. In the flow diagram of Figs. 5a and 5b, six different sections are separated by doted lines.

Section 1: The microprocessor 603 is executing the instruction of a load request load/prog instruction and is writing the proper value in the flash controller register shadow fctr reg 608. From now on, the interface 605 is waiting for the data DATA to be loaded into the flash memory 602.

Section 2: The microprocessor 603 selects the flash memory 602 in write mode and sends the data DATA and addresses ADDR on the bus 604. The interface 605 will mask the write mode to the flash memory 602 and will catch the data DATA and the addresses ADDR. The interface 605 will also generate a wait signal wait for the microprocessor 603 and will store the data DATA in the RAM 601. And the interface 605 will remove the wait signal wait for the microprocessor 603. The flash memory 602 is still not in write mode and the microprocessor 603 could still fetch instructions for example for loading the data DATA.

Section 3: Now the microprocessor 603 is executing the instruction of a program request load/prog instruction. It is writing the proper value in the flash controller register shadow fctr reg 608. After that the interface 605 will again generate a wait signal wait for the microprocessor 603. The interface 605 will set the flash memory 602 in write mode while the microprocessor 603 is in wait state. The interface 605 will read the data DATA from the RAM 601.

Section 4: The interface 605 will load the data DATA in the flash memory data latches.

Section 5: After the last data DATA has been loaded from the RAM 601 into the flash memory 602, the interface 605 will generate a program command for the flash memory 602 and will poll the ready signal from the flash memory 602 which signal indicates that the programming of the flash memory 602 is finished.

Section 6: When the flash memory 602 generates the ready signal, the interface 605 will set the flash memory 602 again in read mode and will remove the wait signal wait for the microprocessor 603.

Below, the management of the addresses, both for the RAM 601 and for the flash memory 602 will be described.

The main issues to be solved are:
1. Where to temporary store the data DATA in the RAM 601.
2. Keep the RAM address to enable retrieval of the data DATA from the RAM 601 afterwards.
3. Keep information about where to program the DATA in the flash memory 602.

The first problem is managed by a direct memory access (DMA) approach embedded in the interface 605, whereas the second and third problems are solved by the embedded algorithm in the interface 605.

For managing the direct memory access (DMA), the interface 605 embeds a DMA engine 610. In general, if a DMA controller and a microprocessor share the signal wires to the memories, there must be a mechanism to arbitrate which device shall have access to the memories. In the here described embodiment of the invention, the interface 605 will access the memories 601 and 602 only after putting the microprocessor 603 in wait state through the general wait signal wait. The signal wait is always available on the system bus, so no other arbitration features are required. On the other hand, the microprocessor 603 must transmit the beginning address in RAM 601 to the DMA engine 610. With this information, the interface 605 is able to re-direct the data DATA sent by the microprocessor 603 to the RAM 601, store the RAM start address, and keep track of the number of words still to be sent. Moreover there is no risk of corrupting data in the RAM 601 writing in a wrong place. The purpose of the DMA engine 610 is to select the proper device, RAM 601 or flash memory 602, send or read data to or from this device, wait for a ready information from the device, and transmit the ready information as acknowledgement to the main state machine 617 in the interface 605.

In Figs. 6a, 6b, 7, and 8, the implementation of the interface 605 architecture is presented. In the block diagram shown in Figs. 6a and 6b, the interface 605, the microprocessor 603, and the RAM 601 are connected to the system bus 604 together with the control signals wait, nREAD/WRITE, the data signal DATA, and the address signal ADDR. Moreover the interface 605 needs to access the chip select of the flash memory 602 called SEL _FLASH and the RAM 601 called SEL_RAM. The interface 605 is mainly based on the main state machine (MSM) 617, the DMA engine 610 and the counter 606. The main state machine 606 checks the requests from the microprocessor 603 and controls the inputs for the addresses and data registers. The counter 606 keeps track of the number of words written in the RAM 601 in order to retrieve them for the flash memory loading.

The registers are:

The flash memory start address register 611 stores the starting address flash start addr which indicates where to program the flash memory 602.

The RAM start address register 612 stores the starting address RAM start addr, which indicates where to temporary save the data DATA in the RAM 601. This starting address must be send to the interface 605 from the microprocessor 603 before sending the data DATA.

The data buffer 613 stores the data DATA at every load cycle before sending the data DATA to the RAM 601 or flash memory 602.

The last count register 607 stores the maximum number of RAM writing steps performed. This register is used to check the end of the successive flash memory loading through a comparator 616.

The flash current address register 614 stores the address currently used by the DMA engine 610 for accessing the flash memory 602. This is:
- The flash memory start address flash start addr for the first loading; and
- (The flash memory start address flash start addr) + (current counter value) during the successive loading cycles;

The RAM current address register 615 stores the RAM address RAM current addr currently used by the DMA engine 610 for accessing the RAM 601. This is:
- The RAM start address RAM start addr for the first write or read operation; and
- (The RAM start address RAM start addr) + (current counter value) during the successive writing or read operation;

The shadow flash control register shadow_fctr_reg 608 stores the load command and the program command sent by the microprocessor 603 and cached by the interface 605.

The real flash control register real_fctr_reg 609 stores the load command and the program command to be sent by the interface 605 to the flash memory 602.

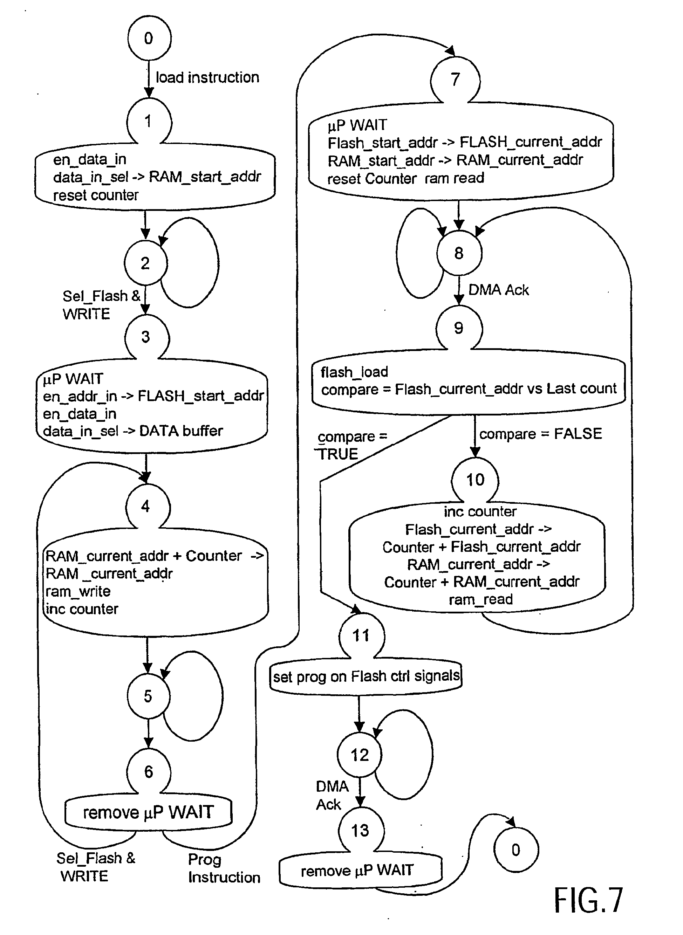

Fig. 7 shows a representation of the behaviour of the main state machine (MSM) 617, i.e. the operations performed by the MSM and its
co-functioning with the Direct Memory Access state machine (DMA SM) 610.
State 0: The MSM is in idle.
State 1: The MSM has detected a load request from the microprocessor (µP in the following). The µP 603 has written the specified Load instruction into the shadow flash control register shadow fctr reg of the Interface 605.
   a) The MSM will set the enable signal en_data_in and the signals update_addr and data_in_sel to allow the transfer from the data bus 604 to the RAM_start_addr register and RAM_current_addr. Now the µP has to send to the MSM the starting address of the RAM space which will be used as buffer. The MSM will catch this value from the DATA bus and store it in the registers RAM_start_addr and RAM_current_addr. Moreover, the MSM will reset the counter 606 used for the incremental address calculation.
State 2: Now the µP has to send to the MSM the starting address of the RAM space which will be used as buffer. The MSM will catch this value from the data bus and store it in the RAM_start_addr register.
State 3: The MSM detects that the µP has selected the flash memory 602 in write mode (the detection is made through the check of the signals SEL_FLASH and nREAD/WRITE available at bus system level, see Fig. 6b). Moreover, the µP has sent DATA and ADDR onto the bus.
   a) the MSM will generate a wait signal WAIT for the µP.
   b) the MSM will set the enable signals en_addr_in and en_data_in and will catch from the DATA and the ADDR system bus. These are the values to be stored in the DATA_buffer and FLASH_start_addr registers.
State 4: Now the MSM has to re-write to the RAM 601 the data catch.
   a) the address for the RAM is calculated as:
      value of the register RAM_current_addr + value of the counter.

      For the first loop the RAM_current_addr = RAM_start_addr and the value of the counter = 0 (see state 1.a)
   b) Now the MSM will send to the DMA SM the ram_write request with the address RAM_current_addr and the data DATA buffer.
State 5: The MSM waits for the acknowledgment from the DMA SM that the RAM write operation has been performed.
State 6: When the MSM has detected the acknowledgement from the DMA SM, the signal WAIT for the µP may be removed. Note that the flash memory is not in write mode and the µP could still fetch instructions for loading DATA.
   Now the µP will continue to send DATA and ADDR onto the system bus as if it were really loading into the flash memory the DATA to be programmed. The MSM will loop between states 4 to 6, deviating the DATA to the RAM and masking the load operation to the flash memory, which will stay in read mode. After the µP has sent all the data to be loaded and performed or whatever other operation is desired, it will send the final program instruction Prog Instruction to the shadow_fctr_reg of the interface.
State 7: The MSM has detected the Prog Instruction from the µP:
   a) The MSM will put the µP in wait because from now on the flash memory will not be available in read mode and so will not deliver instructions to the µP.
   b) The MSM will store the Flash_current_addr in the Last Count register.
   c) The MSM will transfer the Flash_start_addr and the RAM_start_addr (stored in state 3.b) to the Flash_current_addr and RAM_current_addr respectively. Moreover it will reset the counter.
   d) The MSM will send to the DMA the RAM_read request with the RAM_current_addr as address and will wait for the DMA acknowledgment DMA Ack.
State 8: The MSM will now loop until the DMA Ack from the DMA SM will be set (the RAM_read operation has been performed). The Interface will load the DATA into the flash memory data latches.
State 9: The MSM will now perform a real load to the flash memory data latches with the DATA retrieved by the RAM and the address in the Flash_current_addr. This will be performed by the DMA SM through a flash_load request by the MSM. Moreover the MSM will compare the Flash_current_addr with the Last_count value (stored in state 7.b) to check if it is the last DATA to be loaded.
   If Flash_current_addr is equal to Last_count, the MSM will go to state 11.
   b) If Flash_current_addr is different from Last_count, the MSM will go to state 10.
State 10: The MSM will now increment the counter and will update the registers:
   a) Flash_current_addr = Flash_current_addr + Counter;
   b) RAM_current_addr = RAM_current_addr + Counter;
   c) The MSM will send to the DMA SM the ram_read request with RAM_current_addr as address and will go again to state 8 to wait for the DMA acknowledgment.
State 11: If Flash_current_addr = Last_count all the data have been loaded into the flash memory and it is now time to program it, sending to the flash memory the real program command.
State 12: Now, depending on the flash memory architecture (this is independent from the flash memory module), the MSM will loop either a fixed number of clock cycles depending on the program time specified for the flash memory, or will loop until an potential ready signal coming from the flash memory at the end of the program time (if this signal exists, it could go through to the DMA SM and the MSM would wait for the DMA Ack from the DMA SM as usual).
State 13: Having received the DMA Ack from the DMA SM or reached the program time, the MSM can now bring the flash memory back in read mode (as for the load and program, this is done writing the proper bits into the Real_fctr_reg). The MSM will now remove the signal wait for the µP and will go into an idle (state 0).

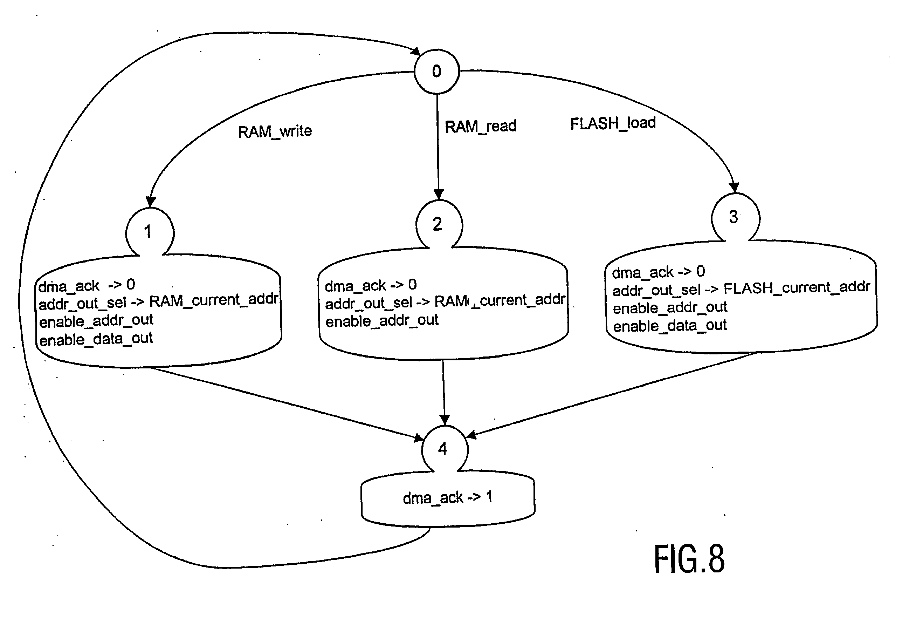

Fig. 8 now shows the behaviour of the embedded Direct Memory Access (DMA) state machine 610 according to the invention. A more detailed description of the DMA SM function follows.
State 0: The DMA SM is in Idle.
State 1: The DMA SM has detected a RAM_write request from the MSM.
   a) the DMA SM resets the signal dma_ack used by the MSM as acknowledgment.
   b) the DMA SM sets the signal addr_out_sel to send to the address system bus the value of the RAM_current_addr.
      the DMA SM may now set the signals enable_addr_out and
      enable_data_out in order to send to the address and data system bus the value of the RAM_current_addr and the value of the DATA_BUFFER registers.
   d) Depending on the RAM architecture, the write operation could take a fixed number of clock cycles or be governed by a ready signal back from the RAM. In any case at the end of the write cycle the DMA SM will go to state 4.
State 2: The DMA SM has detected a RAM_read request from the MSM.
   a) the DMA SM resets the signal dma_ack used by the MSM as acknowledgment.
   b) the DMA SM sets the signal addr_out_sel in order to send to the address system bus the value of the RAM_current_addr.
   c) the DMA SM can set now the signals enable_addr_out in order to send to the address system bus the value of the RAM_current_addr.
   d) Depending on the RAM architecture, the read operation could take a fixed number of clock cycles or be governed by a ready signal back from the RAM. In any case, the DMA SM will go to state 4 at the end of the read cycle.
State 3: The DMA SM has detected a FLASH_load request from the MSM.
   a) the DMA SM resets the signal dma_ack used by the MSM as acknowledgment.
   b) the DMA SM sets the signal addr_out_sel in order to send to the address system bus the value of the FLASH_current_addr.
   c) the DMA SM can now set the signals enable_addr_out and enable_data_out in order to send to the address and data system bus the value of the FLASH_current_addr and the value of the DATA_BUFFER registers.
   d) Depending on the flash memory architecture, the load operation could take a fixed number of clock cycles or be governed by a ready signal back from the flash memory. In any case, at the end of the load cycle, the DMA SM will go to state 4.
State 4: When the memory operation is concluded, the DMA SM sets the signal dma_ack to 1 for the MSM and returns to the idle, state 0.

This concludes the description of the operation of both the main state machine (MSM) and the Direct Memory Access state machine (DMA SM).

The architecture described has several advantages. The software development time is reduced and a robust system developed with a reusable application code, which focuses on the application and not on the limits of the hardware.

The method according to the invention with its architectural implementation is well suited for all applications in which a microprocessor uses an embedded flash memory as instruction memory.

## Claims

1. A method for writing data (DATA) from a processor (603) to a non-volatile memory (602) embedded in an integrated circuit having a bus (604) connecting the processor (603), the non-volatile memory (602), a volatile memory (601) and an interface (605), the method comprising the steps in an order of a-h:
(a) sending a load command by the processor (603) to the non-volatile memory (602);
(b) sending addresses (ADDR) and data (DATA) to be written from the processor (603) to the bus (604);
(c) the interface (605) is masking the write mode to the non-volatile memory (602) and is receiving the sent addresses (ADDR) and data (DATA),
(d) storing of data (DATA) in the volatile memory (601) under control of the interface (605);
(e) sending a wait signal (wait) from the interface (605) to said processor (603), when said data (DATA) has been stored in the volatile memory (601),
(f) the interface (605) is setting the non-volatile memory (602) in write mode,
(g) transferring said data (DATA) under control of the interface (605) from said volatile memory (601) to said non-volatile memory (602),
(h) removing said wait signal (wait) from the processor (603).

2. The method for writing data according to claim 1, wherein the data transfer is controlled by an interface (605).

3. The method for writing data according to claim 1 or 2, wherein at the beginning of the data transfer from the volatile memory (601) to the non-volatile memory (602), said non-volatile memory (602) is set in write mode.

4. The method for writing data according to any of the preceding claims, wherein after transferring data (DATA) and addresses (ADDR) from the volatile memory (601) to the non-volatile memory (602), said non-volatile memory (602) is set in program mode.

5. The method for writing data according to any preceding claim, wherein after receiving a ready signal from the non-volatile memory (602), said non-volatile memory (602) is set in read mode.

6. The method for writing data according to any preceding claim, wherein all of the data (DATA) is transferred first to the volatile memory (601).

7. The method for writing data according to any preceding claim, wherein the addresses (ADDR) corresponding to the data (DATA) to be written to the non-volatile memory (602) are stored intermediately.

8. The method for writing data according to any preceding claim, wherein before the data (DATA) is written to the volatile memory (601), the wait signal (wait) is sent to the processor (603) and is removed after said data (DATA) is completely written to said volatile memory (601).

9. An integrated circuit comprising a processor (603), a volatile memory (601), a non-volatile memory (602) and a bus (604) connecting said processor (603) and the volatile memory (601) **characterized in that** an interface (605) is arranged for controlling a programming of the non-volatile memory (602),
further an address buffer is arranged for addresses in the non-volatile memory (602) to be modified, said interface (605) includes:
means for masking the write mode sent from the processor (603) to the non-volatile memory (602) and
means for receiving addresses (ADDR) and data (DATA) sent by the processor to the non-volatile memory (602),
means for transferring data (DATA) to be written to said non-volatile memory (602) first to said volatile memory (601),
means for sending a wait signal (wait) to said processor (603) when said data (DATA) has been transferred to said volatile memory (601),
means for setting the non-volatile memory (602) in write mode and for transferring said data (DATA) from said volatile memory (601) to said non-volatile memory (602),
means for removing said wait signal (wait) from the processor.

10. The integrated circuit according to claim 9, wherein the non-volatile memory (602) is a flash memory.

11. The integrated circuit according to claim 9 or 10, wherein the volatile memory (601) is a random access memory or a static random access memory.

12. The integrated circuit according to claim 9, 10 or 11, wherein the volatile memory (601) is an embedded volatile memory.

## Patentansprüche

1. Verfahren für das Schreiben von Daten (DATEN) von einem Prozessor (603) auf einen energieunabhängigen Speicher (602), eingefügt in einen integrierten Schaltkreis, welcher einen Bus (604) aufweist, der den Prozessor (603), den energieunabhängigen Speicher (602), einen energieabhängigen Speicher (601) und eine Schnittstelle (605) verbindet, wobei das Verfahren die Schritte in einer Reihenfolge von a-h umfasst:
(a) Senden eines Ladebefehls durch den Prozessor (603) an den energieunabhängigen Speicher (602),
(b) Senden von Adressen (ADDR) und Daten (DATEN), die zu schreiben sind, vom Prozessor (603) an den Bus (604),
(c) die Schnittstelle (605) maskiert den Schreibmodus zum energieunabhängigen Speicher (602) und empfängt die gesendeten Adressen (ADDR) und Daten (DATEN),
(d) Speichern von Daten (DATEN) im energieabhängigen Speicher (601) unter der Steuerung der Schnittstelle (605),
(e) Senden eines Wartesignals (Warten) von der Schnittstelle (605) zum Prozessor (603), wenn die Daten (DATEN) im energieabhängigen Speicher (601) gespeichert worden sind,
(f) die Schnittstelle (605) stellt den energieunabhängigen Speicher (602) in den Schreibmodus ein,
(g) Übertragung der Daten (DATEN) unter Steuerung der Schnittstelle (605) vom energieabhängigen Speicher (601) auf den energieunabhängigen Speicher (602);
(h) Entfernen des Wartesignals (Warten) vom Prozessor (603).

2. Verfahren für das Schreiben von Daten nach Anspruch 1, **dadurch gekennzeichnet, dass** die Datenübertragung durch eine Schnittstelle (605) gesteuert wird.

3. Verfahren für das Schreiben von Daten nach Anspruch 1 oder 2, **dadurch gekennzeichnet, dass** zu Beginn der Datenübertragung vom energieabhängigen Speicher (601) auf den energieunabhängigen Speicher (602) der energieunabhängige Speicher (602) in den Schreibmodus eingestellt wird.

4. Verfahren für das Schreiben von Daten nach einem der vorangehenden Ansprüche, **dadurch gekennzeichnet, dass** nach der Übertragung der Daten (DATEN) und Adressen (ADDR) vom energieabhängigen Speicher (601) auf den energieunabhängigen Speicher (602) der energieunabhängige Speicher (602) in den Programmmodus eingestellt wird.

5. Verfahren für das Schreiben von Daten nach einem der vorangehenden Ansprüche, **dadurch gekennzeichnet, dass** nach dem Erhalt eines Bereit-Signals vom energieunabhängigen Speicher (602) der energieunabhängige Speicher (602) in Lesemodus eingestellt wird.

6. Verfahren für das Schreiben von Daten nach einem der vorangehenden Ansprüche, **dadurch gekennzeichnet, dass** alle Daten (DATEN) zunächst zum energieabhängigen Speicher (601) übertragen werden.

7. Verfahren für das Schreiben von Daten nach einem der vorangehenden Ansprüche, **dadurch gekennzeichnet, dass** die Adressen (ADDR), die den Daten (DATEN) entsprechen, die in den energieunabhängigen Speicher (602) geschrieben werden sollen, zwischengespeichert werden.

8. Verfahren für das Schreiben von Daten nach einem der vorangehenden Ansprüche, **dadurch gekennzeichnet, dass**, ehe die Daten (DATEN) in den energieabhängigen Speicher (601) geschrieben werden, das Wartesignal (Warten) an den Prozessor (603) gesendet wird und entfernt wird, nachdem die Daten (DATEN) vollständig in den energieabhängigen Speicher (601) geschrieben worden sind.

9. Integrierter Schaltkreis, umfassend einen Prozessor (603), einen energieabhängigen Speicher (601), einen energieunabhängigen Speicher (602) und einen Bus (604), welcher den Prozessor (603) und den energieabhängigen Speicher (601) verbindet, **dadurch gekennzeichnet, dass** eine Schnittstelle (605) für die Steuerung einer Programmierung des energieunabhängigen Speichers (602) angeordnet ist,
weiterhin ein Adressenpuffer für Adressen im energieunabhängigen Speicher (602) angeordnet ist, die zu ändern sind, wobei die Schnittstelle (605) einschließt:
eine Einrichtung für das Maskieren des Schreibmodus, gesendet vom Prozessor (603) zum energieunabhängigen Speicher (602) und
eine Einrichtung für den Empfang von Adressen (ADDR) und Daten (DATEN), gesendet vom Prozessor an den energieunabhängigen Speicher (602),
eine Einrichtung für das Übertragen von Daten (DATEN), die in den energieunabhängigen Speicher (602) zu schreiben sind, zuerst zum energieabhängigen Speicher (601),
eine Einrichtung für das Senden eines Wartesignals (Warten) an den Prozessor (603), wenn die Daten (DATEN) in den energieabhängigen Speicher (601) übertragen worden sind,
eine Einrichtung für das Einstellen des energieunabhängigen Speichers (602) auf den Schreibmodus und für das Übertragen der Daten (DATEN) vom energieabhängigen Speicher (601) in den energieunabhängigen Speicher (602),
eine Einrichtung für das Entfernen des Wartesignals (Warten) vom Prozessor.

10. Integrierter Schaltkreis nach Anspruch 9, **dadurch gekennzeichnet, dass** der energieunabhängige Speicher (602) ein Flash-Speicher ist.

11. Integrierter Schaltkreis nach Anspruch 9 oder 10, **dadurch gekennzeichnet, dass** der energieabhängige Speicher (601) ein Speicher mit wahlfreiem Zugriff oder ein statischer Speicher mit wahlfreiem Zugriff ist.

12. Integrierter Schaltkreis nach Anspruch 9, 10 oder 11, **dadurch gekennzeichnet, dass** der energieabhängige Speicher (601) ein eingefügter energieabhängiger Speicher ist.

## Revendications

1. Procédé d'écriture de données (DATA) à partir d'un processeur (603) vers une mémoire non volatile (602) contenue dans un circuit intégré ayant un bus (604) raccordant le processeur (603), la mémoire non volatile (602), une mémoire volatile (601) et une interface (605), le procédé comportant les étapes suivantes dans l'ordre a-h :
a) envoi d'une commande de chargement par le processeur (603) à la mémoire non volatile (602) ;
b) envoi d'adresses (ADDR) et de données (DATA) devant être écrites à partir du processeur (603) vers le bus (604) ;
c) l'interface (605) masque le mode écriture vers la mémoire non volatile (602) et reçoit les adresses (ADDR) et les données (DATA) envoyées ;
d) stockage des données (DATA) dans la mémoire volatile (601) sous le contrôle de l'interface (605) ;
e) envoi d'un signal d'attente (wait) à partir de l'interface (605) vers ledit processeur (603), lorsque lesdites données (DATA) ont été stockées dans la mémoire volatile (601) ;
f) l'interface (605) place la mémoire non volatile (602) en mode écriture ;
g) transfert desdites données (DATA) sous le contrôle de l'interface (605), à partir de ladite mémoire volatile (601) vers ladite mémoire non volatile (602) ;
h) retrait dudit signal d'attente (wait) du processeur (603).

2. Procédé d'écriture de données selon la revendication 1, dans lequel le transfert des données est commandé par une interface (605).

3. Procédé d'écriture de données selon les revendications 1 ou 2, dans lequel, au début du transfert de données à partir de la mémoire volatile (601) vers la mémoire non volatile (602), ladite mémoire non volatile (602) est placée en mode écriture.

4. Procédé d'écriture de données selon l'une des revendications précédentes, dans lequel, après le transfert des données (DATA) et des adresses (ADDR) à partir de la mémoire volatile (601) vers la mémoire non volatile (602), ladite mémoire non volatile (602) est placée en mode programmation.

5. Procédé d'écriture de données selon l'une des revendications précédentes, dans lequel, après réception d'un signal « prêt » provenant de la mémoire non volatile (602), ladite mémoire non volatile (602) est placée en mode lecture.

6. Procédé d'écriture de données selon l'une des revendications précédentes, dans lequel toutes les données (DATA) sont d'abord transférées vers la mémoire volatile (601).

7. Procédé d'écriture de données selon l'une des revendications précédentes, dans lequel les adresses (ADDR) correspondant aux données (DATA) à écrire dans la mémoire non volatile (602) sont stockées de manière intermédiaire.

8. Procédé d'écriture de données selon l'une des revendications précédentes, dans lequel, avant que les données (DATA) ne soient écrites dans la mémoire volatile (601), le signal d'attente (wait) est envoyé au processeur (603) et retiré lorsque lesdites données (DATA) sont complètement écrites dans ladite mémoire volatile (601).

9. Circuit intégré comprenant un processeur (603), une mémoire volatile (601), une mémoire non volatile (602) et un bus (604) raccordant ledit processeur (603) et la mémoire volatile (601), **caractérisé par le fait qu'**une interface (605) est disposée pour la commande de la programmation de la mémoire non volatile (602), dans lequel, de plus, un tampon d'adresse est disposé pour que soient modifiées des adresses dans la mémoire non volatile (602), ladite interface (605) comprenant :
un moyen pour masquer le mode écriture envoyé par le processeur (603) à la mémoire non volatile (602) et
un moyen pour la réception des adresses (ADDR) et des données (DATA) envoyées par le processeur (603) à la mémoire non volatile (602) ;
un moyen pour le transfert préalable des données (DATA) à écrire dans ladite mémoire non volatile (602), vers ladite mémoire volatile (601) ;
un moyen pour l'envoi d'un signal d'attente (wait) vers ledit processeur (603), lorsque lesdites données (DATA) ont été transférées à ladite mémoire volatile (601) ;
un moyen pour placer la mémoire non volatile (602) en mode écriture et transférer lesdites données (DATA) à partir de ladite mémoire volatile (601) vers ladite mémoire non volatile (602) ;
un moyen pour retirer ledit signal d'attente (wait) du processeur.

10. Circuit intégré selon la revendication 9, dans lequel la mémoire non volatile (602) est une mémoire flash.

11. Circuit intégré selon la revendication 9 ou 10, dans lequel la mémoire volatile (601) est une mémoire à accès aléatoire ou une mémoire statique à accès aléatoire.

12. Circuit intégré selon la revendication 9, 10 ou 11, dans lequel la mémoire volatile (601) est une mémoire volatile intégrée.
